# EUROPÄISCHE PATENTSCHRIFT

(11) **EP 0 779 400 B1**
(45) Veröffentlichungstag und Bekanntmachung des Hinweises auf die Patenterteilung: **14.11.2001**
(21) Anmeldenummer: 96119968.4
(22) Anmeldetag: 12.12.1996
(51) Int. Cl.: E04D 3/36, F16B 5/02

(54) **Schraube zum Befestigen von Dämmplatten an einer Unterkonstruktion**
Screw for fastening insulating boards on a supporting construction
Vis pour fixer des panneaux isolants sur une construction porteuse

(30) Priorität: 13.12.1995 DE 19546574
(43) Veröffentlichungstag der Anmeldung: 18.06.1997
(73) Patentinhaber: EJOT VERBINDUNGSTECHNIK GmbH & Co. KG, D-57334 Bad Laasphe (DE)
(72) Erfinder: König,Gottfried Dr., D-57334 Bad Laasphe-Hesselbach (DE)
(74) Vertreter: Bardehle, Heinz, Dipl.-Ing.

(56) Entgegenhaltungen:
- AT-A- 380 546
- DE-U- 8 403 242
- DE-U- 9 105 683
- DE-U- 29 608 583
- US-A- 2 321 378

## Beschreibung

Die Erfindung liegt zugrunde eine Schraube zum Befestigen von Dämmplatten an einer Unterkonstruktion, insbesondere einer Hauswand oder einer Dachkonstruktion, mit einem Schraubenkopf, einem an diesen anschließenden gewindefreien Schaftabschnitt und einem innerhalb des Schaftabschnitts angeordneten, als Bund ausgebildeten Anschlag zur Abstützung eines eine Dämmplatte abdeckenden Blechteils, das mit einer das Hindurchstecken der Schraube ermöglichenden Öffnung versehen ist, deren Durchmesser etwa demjenigen des gewindefreien Schaftabschnitts entspricht.

Eine derartige Schraube ist aus der DE-PS 34 20 863 bekannt. In dieser Patentschrift werden verschiedene Beispiele für die Bildung des Anschlages angegeben, nämlich ein vorstehender Bund, ein einzelner Vorsprung, das Ende des Gewindes der Schraube und eine Hülse. Da bei dieser bekannten Gestaltung der Anschlag zur Abstützung des Blechteils, das durch eine großflächige Unterlegscheibe gebildet ist, dient, muß die Öffnung in dem Blechteil so klein sein, daß z.B. das Gewinde oder der Bund sich hinter das Blechteil setzen kann. Im Falle der Verwendung eines Bundes als Anschlag muß der Durchmesser des Bundes über den Durchmesser der Öffnung hinausgehen, so daß das Hindurchstecken der Schraube durch die Unterlegscheibe nur möglich ist, wenn dabei die Unterlegscheibe gegenüber dem Bund nachgeben kann, ohne daß die Unterlegscheibe so verformt wird, daß sie vom Bund nicht mehr abgestützt werden kann. Im Falle der Verwendung eines Gewindes läßt sich die Öffnung so ausbilden, daß ihr Durchmesser kleiner als der Außen-durchmesser des Gewindes ist, was ein Aufschrauben der Unterlegscheibe auf das Gewinde ermöglicht, bis die Unterlegscheibe den gewindefreien Schaftabschnitt erreicht. Um hier die durch das Gewindeende bedingte schmale Auflagestelle zu vergrößern, wird der letzte Gewindegang durch eine quer zur Schraubenachse verlaufende Ebene begrenzt, womit jedoch wegen der Gewindesteigung ein nur relativ kurzer Auflagebereich entsteht.

Es ist aus dem Gebrauchsmuster G 9105683.7 bekannt, die vorstehend erläuterte Schraube dazu zu verwenden, um Dachbahnen auf Dämmplatten aus weichem Isoliermaterial auf einer festen Unterlage zu befestigen.

Eine Ausgestaltung der Schraube gemäß der vorstehend erwähnten DE-PS 34 20 863 ist in der US-PS 2,321,378, Fig. 1 und 2, offenbart. Diese Schraube ist so gestaltet, daß bei ihr der aus zwei getrennten Gewindegängen bestehende Bund den Schaftabschnitt jeweils nur teilweise umläuft und sich an dessen jeweiligen einem Ende eine schräge Einlauframpe derart anschließt, daß zwischen den Enden der gleich langen Einlauframpen ein Einlaufspalt für den Öffnungsrand des Blechteils frei bleibt, in dessen Bereich die Einlauframpen sich an die Oberfläche des Schaftabschnitts annähern. Der Bund ist also mit seinen Einlauframpen in zwei Teile aufgeteilt, wobei der Bund in jedem seiner Teile auf gleichem Abstand zum Schraubenkopf liegt. Aufgrund der Aufteilung des Bundes in zwei Teile ergibt sich eine symmetrische Abstützung für ein von den beiden Bundteilen getragenes Blechteil. Von der vorstehend beschriebenen Gestaltung einer Schraube geht die Erfindung aus.

Der Erfindung liegt die Aufgabe zugrunde, bei einer Aufteilung des Bundes in mindestens zwei Teile die Bundteile und die sich an diese anschließenden Einlauframpen so zu gestalten, daß sich das Überschieben eines Blechteils über den Bund problemlos ermöglichen läßt. Erfindungsgemäß geschieht dies dadurch, daß die sich an die Bundteile anschließenden Einlauframpen unterschiedliche Längen aufweisen. Bei einer vorteilhaft gestalteten Schraube ist der Bund in zwei Teile aufgeteilt.

Um dabei den Einlauframpen eine unterschiedliche Länge zu geben, kann man der einen Einlauframpe eine Erstreckung über einen Winkel von 90° und der anderen Einlauframpe eine Erstreckung über einen Winkel 180° geben.

Um eine symmetrische Abstützung des Blechteils durch den Bund zu gewährleisten, gibt man zweckmäßig den beiden Bundteilen jeweils eine Erstreckung über 90°.

Aufgrund dieser unterschiedlichen Längen der Einlauframpen ergibt sich eine Unsymmetrie der Anfänge der Einlauframpen in bezug auf den Schraubenkopf, wodurch in dem Bereich des Schaftes zwischen den Enden der Einlauframpen ein Bereich verbleibt, in den sich der Rand der Öffnung des Blechteils zwischen diese Enden schieben und daraus durch Verdrehen des Blechteils gewissermaßen auf die beiden Bundteile aufschrauben läßt. Die Gestaltung wirkt sich also günstig für das Aufschieben des Blechteils aus.

Bei dem Blechteil kann es sich um eine größere Blechtafel handeln, wie sie bei sogenannten Sandwich-Bauelementen (Dämmplatte mit beiderseitigen Blechtafeln) üblich sind, oder um eine größere Unterlegscheibe, mit der gegenüber einer darunter angeordneten Dämmplatte auf diese die notwendige Andrückkraft großflächig ausgeübt wird.

In den Figuren sind Ausführungsbeispiele der der Erfindung zugrunde liegenden Schrauben (s. Fig. 1 bis 5) und die erfindungsgemässe Schraube selbst (s. Fig. 6a, 6b, 7) dargestellt. Es zeigen
- Fig. 1a: eine Schraube mit verkürztem Bund in Seitensicht,

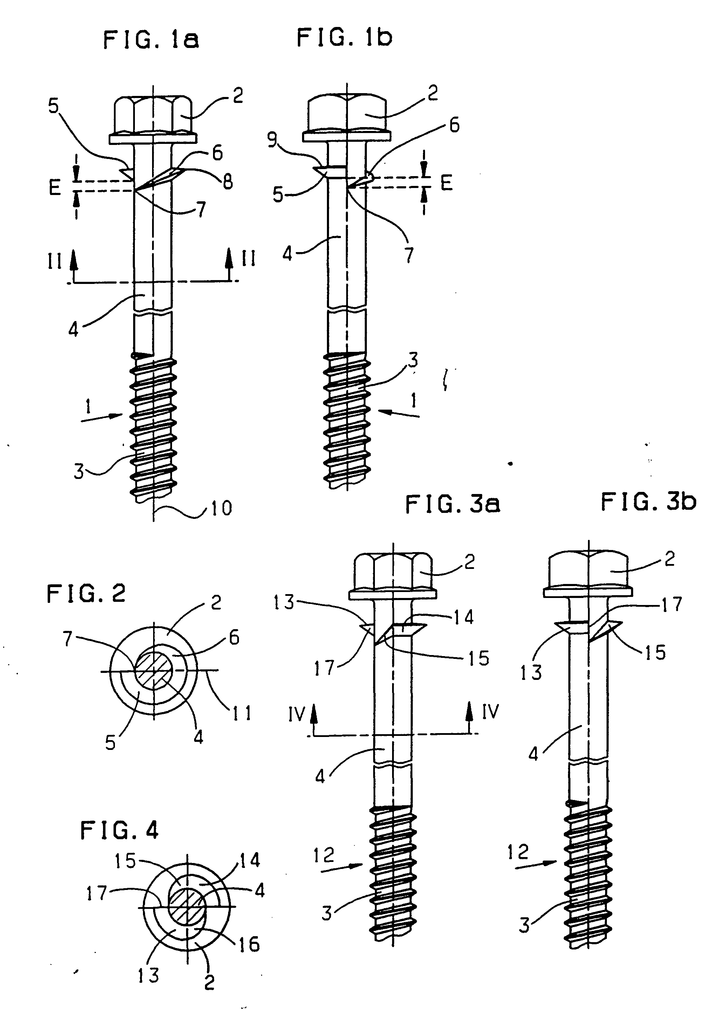

- Fig. 1b: die gleiche Schraube um 90° gedreht,
- Fig. 2: einen Schnitt längs der Linie II-II aus Figur 1a,
- Fig. 3a und 3b: eine Abwandlung der Schraube gemäß Figur 1a und 1b und zwar derart, daß der Bund auf zwei Teile aufgeteilt ist,
- Fig. 4: einen Schnitt längs der Linie IV-IV aus Figur 3a,

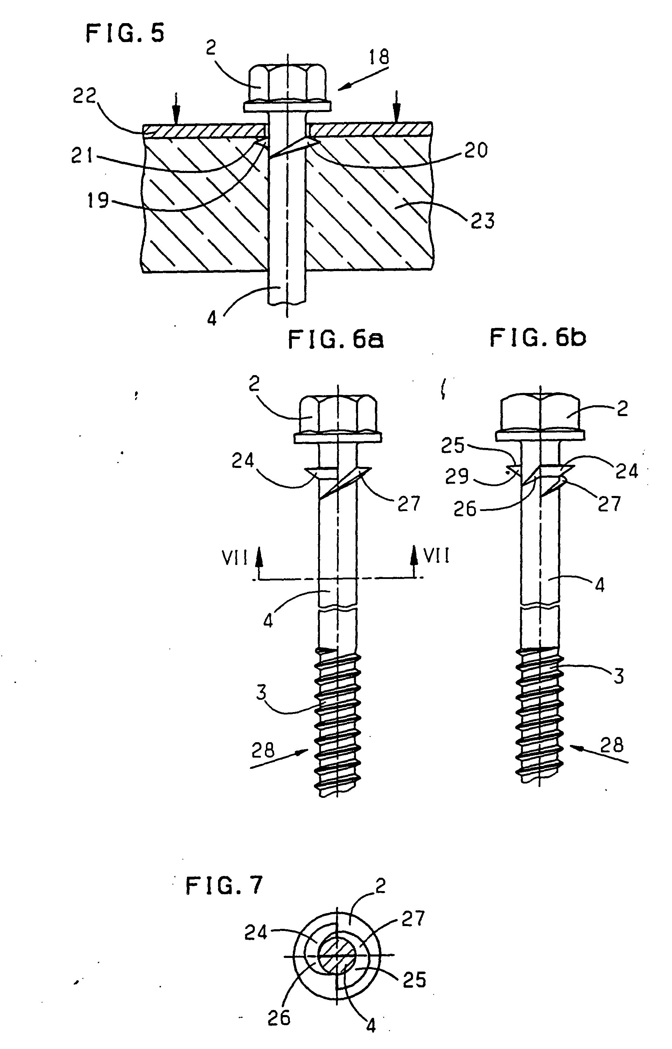

- Fig. 5: eine Schraube (dargestellt ohne Gewinde) mit einem im Querschnitt einem gleichschenkligen Dreieck bildenden Bund,
- Fig. 6a und 6b: eine Abwandlung der Schraube gemäß Figuren 3a und 3b, und zwar in dem Sinne, daß die Einlauframpen unterschiedliche Länge aufweisen,
- Fig. 7: einen Schnitt längs der Linie VII-VII aus Figur 6a.

In der Figur 1a ist eine Schraube 1 mit einem Schraubenkopf 2, einem Gewindeabschnitt 3 und einem gewindefreien Schaftabschnitt 4 dargestellt, die im Bereich dieses Schaftabschnitts den verkürzten Bund 5 aufweist. Der Bund 5 erstreckt sich hier über einen Umlaufwinkel um den Schaftabschnitt 4 von 180°, wie insbesondere aus der weiter unten näher erläuterten Figur 2 zu ersehen ist. An den Bund 5 schließt sich die Einlauframpe 6 an, die gegenüber der parallel zum Schraubenkopf 2 sich erstreckenden Lage des Bundes 5 in einer Schräglage verläuft, so daß sich zwischen dem Ende 7 der Einlauframpe 6 und dem Bund 5 der Einlaufspalt E ergibt, in dem der Öffnungsrand eines hier nicht dargestellten Blechteils eingeführt werden kann (siehe hierzu Figur 5). Der Querschnitt des Bundes 5 und der Einlauframpe 6 ist hier so gestaltet, daß er im wesentlichen ein Dreieck mit dem nach auswärts weisenden Scheitel 8 bildet, wobei die dem Schraubenkopf 2 zugewandte Seite 9 (siehe Figur 1b) im wesentlichen senkrecht zur strichpunktiert eingezeichneten Schraubenachse 10 verläuft.

In Figur 1b ist die gleiche Schraube in Seitensicht dargestellt, allerdings in einer um 90° gedrehten Lage. Aufgrund dieser Drehung erscheint der Einlaufspalt E auf der dargestellten Vorderseite der Schraube 1, wobei gleichzeitig ein sich über 90° erstreckender Teil des Bundes 5 und ein Teil der Einlauframpe 6 sichtbar sind, die mit ihrem Ende 7 in die Oberfläche des Schaftes 4 übergeht. Aus Figur 1b ist noch die dem Schraubenkopf zugewandte Seite 9 des Bundes 5 deutlich sichtbar, die sich im wesentlichen parallel zu dem Schraubenkopf 2 erstreckt.

Der gewindelose Schaftabschnitt 4 wird durch den Bund 5 mit der Einlauframpe 6 in zwei Teile unterteilt, nämlich einen Teil zwischen Bund 5 und Schraubenkopf 2 und einen weiteren Teil zwischen Bund 5 und dem Gewindeabschnitt 3. Diese beiden Teile sind hier mit gleichem Durchmesser gezeichnet. Es sei jedoch darauf hingewiesen, daß die Durchmesser auch unterschiedlich sein können, insbesondere ist es möglich, den zwischen Bund 5 und Schraubenkopf 2 liegenden Teil mit größerem Durchmesser auszubilden als dem anderen Teil. Dies kann sich aus fertigungs- und anwendungstechnischen Gründen als günstig erweisen.

In der Figur 2 ist die vorstehend beschriebene Schraube 1 im Schnitt längs der Linie II-II dargestellt. Hieraus ergibt sich eine Umfassung des Schaftsabschnitts 4 durch den Bund 5 über einen Winkel von 180°, wobei sich an den Bund 5 von der Linie 11 ab die Einlauframpe 6 anschließt, die dann in ihrem Ende 7 ausläuft, wobei sie gleichzeitig in die Oberfläche des Schaftabschnitts 4 übergeht. Die Einlauframpe 6 erstreckt sich dabei also wie der Bund 5 über einen Umlaufwinkel von 180°.

In den Figuren 3a und 3b ist in ähnlicher Darstellungsweise wie gemäß Figur 1a und 1b eine Schraube 12 dargestellt, bei der im Gegensatz zur Schraube 1 gemäß Figur 1a und 1b der Bund in zwei Teile aufgeteilt ist, nämlich in Bundteil 13 und in Bundteil 14. An den Bundteil 14 schließt sich die Einlauframpe 15 an, die zum Bundteil 13 gehörenden Einlauframpe 16 (siehe Figur 4) ist in den Figuren 3a und 3b nicht sichtbar.

Aus Figur 4, die einen Schnitt längs der Linie IV-IV aus Figur 3a darstellt, ergibt sich eine Aufteilung des Bundes in die beiden Bundteile 13 und 14, an die sich jeweils die Einlauframpen 15 und 16 anschließen. Da sich die beiden Bundteile 13 und 14 diametral gegenüberliegen, ergibt sich für ein dagegen anliegendes Blechteil eine symetrische Abstützung.

In der Figur 3a ist der Bundteil 14 vollständig und von dem Bundteil 13 nur dessen ihn begrenzende Stirnfläche 17 zu sehen. Außerdem zeigt die Figur 3a die an den Bundteil 14 anschließende Einlauframpe 15.

Wenn nun die Schraube 12 gemäß Figur 3a um 90° in der Weise gedreht wird, daß der Bundteil 14 hinter die Schraube 12 gedreht wird und die Stirnseite 17 in der Mitte der Vorderseite der Schraube 12 erscheint, dann ergibt sich die Darstellung gemäß Figur 3b, in der auf der rechten Seite des Schaftabschnittes 4 die Einlauframpe 15 liegt und auf der linken Seite die gesamte Länge des Bundteiles 13. Der Bundteil 14 ist in Figur 3b wegen dieser Drehung nicht mehr sichtbar. Die beiden Einlauframpen 15 und 16 sind bei dieser Ausführungsform gleichlang.

In Figur 5 ist eine Schraube 18 dargestellt (nur Schraubenkopf 2 und gewindefreier Schaftabschnitt 4), deren Gestaltung im Prinzip derjenigen gemäß Figur 1 entspricht. Jedoch besitzt der Bund 19 mit seiner Einlauframpe 20 einen Querschnitt, der einem gleichschenkligen Dreieck mit radial nach auswärts weisendem Scheitel 21 entspricht. Eine solche Gestaltung eignet sich insbesondere für das Walzen bzw. Rollen bei der Herstellung des Bundes 19 und der Einlauframpe 20.

In der Figur 5 zur Erläuterung der Verwendung der erfindungsgemäßen Schraube, hier also der Schraube 18, desweiteren das Blechteil 22 und ein Stück einer davon abgedeckten Dämmplatte 23 dargestellt. Das Blechteil 22 sitzt zwischen dem Schraubenkopf 2 und dem Bund 19 und wird daher von diesem bei einem gemäß der Richtung der eingezeichneten Pfeile wirkenden Druck auf den Bund 19 gedrückt, wobei sich das Blechteil 22 an dem Bund 19 abstützt. Ein solcher Druck kann z.B. entstehen, wenn eine Person auf dem Blechteil 22 steht, das zusammen mit der Dämmplatte 23 z.B. die Isolierung eines Daches bildet. Der Bund 19 verhindert dabei, daß dieser Druck auf das Blechteil 22 ein Zusammendrücken der vergleichsweise weichen Dämmplatte 23 bewirkt, was bei fehlendem Anschlag in Form des Bundes 19 dazu führen könnte, daß der Schraubenkopf 2 weit aus dem Blechteil 22 heraustritt.

In den Figuren 6a, 6b und 7 ist eine Variate zu der Gestaltung gemäß den Figuren 3a, 3b und 4 dargestellt, bei der es sich um unterschiedliche Längen der sich an zwei Bundteile 24 und 25 anschließenden Einlauframpen 26 und 27 handelt, was deutlich aus Figur 7 ersichtlich ist. Die Einlauframpe 26 im Anschluß an das Bundteil 24 erstreckt sich nur über einen Winkel von 90°, während sich die Einlauframpe 27 im Anschluß an das Bundteil 25 sich über einen Winkel von 180° erstreckt. Letzteres ist auch aus Figur 6a deutlich ersichtlich, wonach die Einlauframpe 27 das betreffende Ende des Bundes 24 überlappt.

Bei der Darstellung der Schraube 28 gemäß Figur 6b handelt es sich um eine Verdrehung der Schraube gemäß Figur 6a um 90°, wobei der Bund 24, der sich über 90° erstreckt (wie auch der Bund 25) von der linken Seite der Schraube 28 auf deren rechte Seite wandert, wobei die Einlauframpe 26 gemäß Figur 7 nunmehr sichtbar wird und die Einlauframpe 27 teilweise verschwindet. Außerdem erscheint in Figur 6b die Stirnfläche 29 des Bundes 25, der in Figur 6a nicht sichtbar ist.

Das Besondere der Schraube 28 ist, daß sich deren eine Einlauframpe 26 über 90° und deren anderen Einlauframpe 27 über 180° erstrecken.

## Patentansprüche

1. Schraube (28) zum Befestigen von Dämmplatten (23) an einer Unterkonstruktion, insbesondere einer Hauswand oder einer Dachkonstruktion, mit einem Schraubenkopf (2), einem an diesen anschließenden gewindefreien Schaftabschnitt (4) und einem innerhalb des Schaftabschnitts (4) angeordneten, als Bund (24/25) ausgebildeten Anschlag zur Abstützung eines eine Dämmplatte (23) abdeckenden Blechteils (22), das mit einer das Hindurchstecken der Schraube (28) ermöglichenden Öffnung versehen ist, deren Durchmesser etwa demjenigen des gewindefreien Schaftabschnitts (4) entspricht, wobei der Bund (24/25) den Schaftabschnitt (4) nur teilweise umläuft und sich an dessen einem Ende eine schräge Einlauframpe (26/27) derart anschließt, daß zwischen dem anderen Ende des Bundes (24/25) und dem Beginn der Einlauframpe (26/27) ein Einlaufspalt (E) für den Öffnungsrand des Blechteils (22) frei bleibt, in dessen Bereich die Einlauframpe (26/27) sich an die Oberfläche des Schaftabschnitts (4) annähert, und der Bund (24/25) mit seiner Einlauframpe (26/27) in mindestens zwei Teile aufgeteilt ist, wobei der Bund (24/25) in jedem seiner Teile auf gleichem Abstand zum Schraubenkopf (2) liegt, **dadurch gekennzeichnet, daß** die sich an die Bundteile (24,25) anschließenden Einlauframpen (26,27) unterschiedliche Längen aufweisen.

2. Schraube (28) nach Anspruch 1, **dadurch gekennzeichnet, daß** der Bund (24/25) in zwei Bundteile aufgeteilt ist.

3. Schraube nach Anspruch 2, **dadurch gekennzeichnet, daß** sich die eine Einlauframpe (26) über einen Winkel von 90° und die andere Einlauframpe (27) über einen Winkel von 180° erstreckt.

4. Schraube nach Anspruch 2, **dadurch gekennzeichnet, daß** sich die beiden Bundteile (24,25) jeweils über 90° erstrecken.

## Claims

1. Screw (28) for fixing insulating panels (23) to a substructure, in particular a house wall or a roof structure, comprising a screw head (2), an unthreaded shank portion (4) connected thereto and a stop in the form of a collar (24/25) arranged within the shank portion (4) in order to support a sheet-metal component (22) covering an insulating panel (23) and provided with an opening which allows for the passage of the screw (28) and the diameter of which corresponds approximately to that of the unthreaded shank portion (4), the collar (24/25) only partly encircling the shank portion (4) and being connected at one end to an inclined inlet ramp (26/27) in such a manner that an inlet gap (E) remains free for the edge of the opening of the sheet-metal component (22) between the other end of the collar (24/25) and the beginning of the inlet ramp (26/27), the inlet ramp (26/27) approaching the surface of the shank portion (4) in the region of this inlet gap, and the collar (24/25) with its inlet ramp (26/27) being divided into at least two parts, the collar (24/25) being situated at the same distance from the screw head (2) in each of its parts, **characterised in that** the inlet ramps (26, 27) connected to the collar parts (24, 25) have different lengths.

2. Screw (28) according to claim 1, **characterised in that** the collar (24/25) is divided into two collar parts.

3. Screw according to claim 2, **characterised in that** one inlet ramp (26) extends over an angle of 90° and the other inlet ramp (27) extends over an angle of 180°.

4. Screw according to claim 2, **characterised in that** the two collar parts (24, 25) each extend over 90°.

## Revendications

1. Vis (28) destinée à la fixation de panneaux d'isolation (23) sur une infrastructure, notamment un mur de bâtiment ou une structure de toiture, comportant une tête (2) de vis, un tronçon de tige non fileté (4) s'y raccordant et une butée agencée sous la forme d'une collerette (24 / 25), qui est disposée à l'intérieur du tronçon de tige (4) pour le support d'un élément de tôle (22) recouvrant un panneau d'isolation (23), lequel est muni d'un orifice permettant le passage de la vis (28), dont le diamètre correspond sensiblement à celui du tronçon de tige non fileté (4), la collerette (24 / 25) n'entourant que partiellement le tronçon de tige (4), et une rampe d'entrée oblique (26 / 27) se raccordant à l'une de ses extrémités de telle sorte qu'une fente d'entrée (E) subsiste entre l'autre extrémité de la collerette (24 / 25) et le début de la rampe d'entrée (26 / 27) pour le bord de l'orifice de l'élément de tôle (22), dans la zone de laquelle la rampe d'entrée (26 / 27) arrive à proximité de la surface du tronçon de tige (4), et la collerette (24 / 25) avec sa rampe d'entrée (26 / 27) étant subdivisée en au moins deux parties, la collerette (24 / 25) étant située dans chacune de ses parties à un même écartement de la tête (2) de vis, **caractérisée en ce que** les rampes d'entrée (26, 27) se raccordant aux parties de collerette (24, 25) sont de longueurs différentes.

2. Vis (28) selon la revendication 1, **caractérisée en ce que** la collerette (24 / 25) est subdivisée en deux parties de collerette.

3. Vis selon la revendication 2, **caractérisée en ce que** l'une des rampes d'entrée (26) s'étend selon un angle de 90°, et **en ce que** l'autre rampe d'entrée (27) s'étend selon un angle de 180°.

4. Vis selon la revendication 2, **caractérisée en ce que** les deux parties de collerette (24, 25) s'étendent respectivement sur 90°.
